# EUROPEAN PATENT APPLICATION

(11) **EP 4 539 507 A1**
(43) Date of publication of application: **16.04.2025**
(21) Application number: 24804405.9
(22) Date of filing: 11.05.2024
(51) Int. Cl.: H04R 9/06

(54) **LOUDSPEAKER MODULE AND VEHICLE**

(30) Priority: 17.08.2023 CN 202311043580
(71) Applicant: Shenzhen Yinwang Intelligent Technologies Co., Ltd., Shenzhen, Guangdong 518129 (CN)
(72) Inventor: YANG, Zhangzhao, Shenzhen, Guangdong 518129 (CN); TAO, Ling, Shenzhen, Guangdong 518129 (CN); WANG, Yueqi, Shenzhen, Guangdong 518129 (CN); WU, Sheng, Shenzhen, Guangdong 518129 (CN)
(74) Representative: MERH-IP Matias Erny Reichl Hoffmann Patentanwälte PartG mbB
(86) International application number: PCT/CN2024/092722
(87) International publication number: WO 2025/035855

(57) **Abstract**

This application provides a loudspeaker module and a vehicle. The loudspeaker module includes a loudspeaker unit and a frame body. The loudspeaker unit is disposed in the frame body and fastened to the frame body through a first mounting surface. The loudspeaker unit includes a diaphragm. The diaphragm is disposed around the inside of the loudspeaker unit. The frame body and a side that is of the diaphragm and that is close to the first mounting surface form a first cavity. An included angle between a sound output direction of the first cavity and a plane on which the first mounting surface is located ranges from -30° to 30°. An outer circumference of the frame body includes a second mounting surface, configured to fasten the loudspeaker module to a preset mounting position. A main plane of the second mounting surface is parallel to a main plane of the preset mounting position. An included angle between an axial direction of the loudspeaker unit and a main plane of the second mounting surface ranges from -30° to 30°. According to the loudspeaker module and the vehicle provided in embodiments of this application, vibration generated at and near the mounting position of the loudspeaker module during operation of the loudspeaker module can be effectively reduced, and sound quality of the loudspeaker module can be improved.

## Description

This application claims priority to Chinese Patent Application No. 202311043580.8, filed with the China National Intellectual Property Administration on August 17, 2023 and entitled "LOUDSPEAKER MODULE AND VEHICLE", which is incorporated herein by reference in its entirety.

### TECHNICAL FIELD

This application relates to the field of loudspeaker technologies, and in particular, to a loudspeaker module and a vehicle.

### BACKGROUND

A loudspeaker is an electro-acoustic transducer that converts electric energy into sound energy and radiates it afar in the air. A moving-coil loudspeaker is usually composed of a support system, a magnetic circuit system, and a vibration system. The magnetic circuit system and the vibration system are main parts for conversion between the electric energy and the sound energy. The magnetic circuit system may be powered on to generate a magnetic field, to exert a force on a voice coil in the vibration system and drive the voice coil to vibrate. The voice coil drives a vibration plate to vibrate, and the vibration plate drives air to vibrate, to finally generate a sound.

Due to force interaction, in a process in which an alternating force exerted by the magnetic circuit system on the voice coil causes the voice coil to vibrate and radiate a sound wave, the magnetic circuit system is subject to a reaction force, causing a main body of a loudspeaker unit, an electro-acoustic conversion component, or the like to vibrate. As a result, a component such as a mounting surface of a loudspeaker module vibrates and generates an abnormal sound, severely affecting sound quality of the loudspeaker.

### SUMMARY

This application provides a loudspeaker module and a vehicle, so that vibration generated at a mounting position of the loudspeaker module and near the mounting position during operation of the loudspeaker module can be effectively reduced, and sound quality of the loudspeaker module can be improved.

According to a first aspect, a loudspeaker module is provided, and includes a loudspeaker unit and a frame body. The loudspeaker unit is disposed in the frame body. The loudspeaker unit includes a first mounting surface. The first mounting surface is located at an end with a larger radial size of the loudspeaker unit. The loudspeaker unit is fastened to the frame body through the first mounting surface. The loudspeaker unit further includes a diaphragm. The diaphragm is disposed around the inside of the loudspeaker unit. The frame body and a side that is of the diaphragm and that is close to the first mounting surface form a first cavity. An included angle between a sound output direction of the first cavity and a plane on which the first mounting surface is located ranges from -30° to 30°. An outer circumference of the frame body includes a second mounting surface. The second mounting surface is configured to fasten the loudspeaker module to a preset mounting position. A main plane of the second mounting surface is parallel to a main plane of the preset mounting position. An included angle between an axial direction of the loudspeaker unit and the main plane of the second mounting surface ranges from -30° to 30°.

In this embodiment provided in this application, the included angle between the axial direction of the loudspeaker unit and the second mounting surface ranges from -30° to 30°, and the included angle between the sound output direction of the first cavity and the plane on which the first mounting surface ranges from -30° to 30°. In this way, sound wave energy transferred in a direction perpendicular to the second mounting surface can be reduced, so that vibration generated at the mounting position of the loudspeaker module and near the mounting position during operation of the loudspeaker module can be reduced, noise generated by vibration at the mounting position can be reduced, and sound quality of the loudspeaker module can be improved.

With reference to the first aspect, in some implementations of the first aspect, the frame body and a side that is of the diaphragm and that faces away from the first mounting surface may form a second cavity. The second cavity and the first cavity are respectively disposed on two sides of the second mounting surface in a direction perpendicular to the main plane of the second mounting surface. In addition, the frame body includes an opening part, so that the second cavity is an open cavity. An opening direction of the opening part is perpendicular to the main plane of the second mounting surface.

In this embodiment provided in this application, the frame body and the side that is of the diaphragm and that faces away from the first mounting surface form the second cavity, and the second cavity is an open cavity. After the loudspeaker module is mounted at the mounting position, the open second cavity and an accommodation space at the mounting position may form an infinite rear cavity, to lose a sound wave radiated by the loudspeaker module in a direction of the second cavity, and prevent the sound wave radiated by the loudspeaker module in the direction of the second cavity from affecting a sound wave radiated in a direction of the first cavity. In this way, it is ensured that the sound wave is radiated in the direction of the first cavity.

With reference to the first aspect, in some implementations of the first aspect, a sealed surface is formed between the first mounting surface and the frame body, so that the first cavity is isolated from the second cavity.

In this embodiment provided in this application, the first mounting surface of the loudspeaker unit is fastened to the frame body, and the sealed surface is formed, so that the first cavity is isolated from the second cavity. This can prevent the sound wave radiated by the loudspeaker module in the direction of the second cavity from affecting the sound wave radiated in the direction of the first cavity, to ensure sound production performance of the first cavity.

With reference to the first aspect, in some implementations of the first aspect, a ratio of a maximum distance from a frame-body part corresponding to the first cavity to the main plane of the second mounting surface to a size of the loudspeaker module in the direction perpendicular to the main plane of the second mounting surface ranges from 1/4 to 3/4.

In this embodiment provided in this application, the ratio of the maximum distance from the frame-body part corresponding to the first cavity to the main plane of the second mounting surface to the size of the loudspeaker module in the direction perpendicular to the main plane of the second mounting surface ranges from 1/4 to 3/4. In this way, it can be ensured that when the loudspeaker module is disposed at the mounting position, a ratio of a mounting depth of the loudspeaker module at the preset mounting position to the size of the loudspeaker module in the direction perpendicular to the main plane of the second mounting surface ranges from 1/4 to 3/4, so that torque between the loudspeaker module and the preset mounting position can be reduced, and vibration at the mounting position during operation of the loudspeaker module can be reduced.

With reference to the first aspect, in some implementations of the first aspect, a volume of the first cavity is greater than or equal to 0.1 liters.

In this embodiment provided in this application, the volume of the first cavity is greater than or equal to 0.1 liters, so that an acoustic cut-off frequency of the loudspeaker module can be far greater than a resonance frequency of the loudspeaker module. In this way, it is ensured that the loudspeaker module has a wide operation band, and acoustic performance of the loudspeaker is ensured.

With reference to the first aspect, in some implementations of the first aspect, a ratio of the acoustic cut-off frequency of the loudspeaker module to the resonance frequency of the loudspeaker module is greater than or equal to 4.

In this embodiment provided in this application, due to the volume design of the first cavity, the ratio of the acoustic cut-off frequency of the loudspeaker module to the resonance frequency of the loudspeaker module is greater than or equal to 4, so that the loudspeaker module has a wide operation band, and acoustic performance of the loudspeaker module is ensured.

With reference to the first aspect, in some implementations of the first aspect, the loudspeaker module further includes at least one first sub-cavity, and the at least one first sub-cavity communicates with the first cavity.

In this embodiment provided in this application, the loudspeaker module includes at least one first sub-cavity, and the at least one first sub-cavity communicates with the first cavity, so that a resonance peak of the first cavity of the loudspeaker module can be reduced, a bandwidth can be expanded, and acoustic performance of the loudspeaker module can be improved.

With reference to the first aspect, in some implementations of the first aspect, a side that is of the second mounting surface and that is close to the preset mounting position includes a shock absorption pad.

In this embodiment provided in this application, the side that is of the second mounting surface and that is close to the preset mounting position includes the shock absorption pad. In this way, the sound wave energy transferred in the direction perpendicular to the second mounting surface can be reduced, so that vibration generated at the mounting position of the loudspeaker module and near the mounting position during operation of the loudspeaker module can be reduced, to prevent noise generated by vibration at the mounting position from affecting the sound quality of the loudspeaker module.

With reference to the first aspect, in some implementations of the first aspect, the second mounting surface includes mounting holes. There are at least three mounting holes. The mounting holes penetrate the second mounting surface in the direction perpendicular to the second mounting surface.

In this embodiment provided in this application, the second mounting surface includes at least three mounting holes, and the mounting holes penetrate the second mounting surface in the direction perpendicular to the second mounting surface, so that stability of connection between the loudspeaker module and the preset mounting position can be improved.

With reference to the first aspect, in some implementations of the first aspect, there are a plurality of loudspeaker units. The plurality of loudspeaker units form a symmetric structure, and first mounting surfaces of the plurality of loudspeaker units are close to each other.

In this embodiment provided in this application, the plurality of loudspeaker units form the symmetric structure, and the first mounting surfaces of the plurality of loudspeaker units are close to each other, so that sound pressure of the loudspeaker module can be increased, acoustic performance of the loudspeaker module can be improved, and vibration at the preset mounting position can be further reduced.

With reference to the first aspect, in some implementations of the first aspect, there are a plurality of frame bodies. A quantity of frame bodies is the same as a quantity of loudspeaker units. The plurality of loudspeaker units are respectively accommodated in the corresponding frame bodies.

According to a second aspect, a vehicle is provided. The vehicle includes the loudspeaker module according to any one of the first aspect or the possible implementations of the first aspect. The vehicle includes a vehicle door. The preset mounting position is located on the vehicle door. The main plane of the preset mounting position is parallel to a plane direction of the vehicle door.

With reference to the second aspect, in some implementations of the second aspect, the vehicle further includes an outer wall. The outer wall and the preset mounting position form an accommodation space. When the loudspeaker module is fastened to the preset mounting position, the frame-body part corresponding to the first cavity is located in the accommodation space. The opening part communicates with the accommodation space. The second cavity and the accommodation space form a closed cavity.

With reference to the second aspect, in some implementations of the second aspect, a ratio of a volume of the second cavity to a volume of the closed cavity is less than or equal to 1/10.

In this embodiment provided in this application, when the loudspeaker module is mounted at the preset mounting position, due to the opening part, the second cavity communicates with the accommodation space formed at the mounting position, and then the closed cavity is formed, to lose a sound wave radiated by the loudspeaker module in the direction of the second cavity, and prevent the sound wave radiated by the loudspeaker module in the direction of the second cavity from affecting a sound wave radiated in the direction of the first cavity. In this way, it is ensured that the sound wave is radiated in the direction of the first cavity. The ratio of the volume of the second cavity to the volume of the closed cavity is less than or equal to 1/10, so that sound production performance of the first cavity of the loudspeaker module can be further improved.

### BRIEF DESCRIPTION OF DRAWINGS

FIG. 1 is a diagram of a three-dimensional structure of a loudspeaker module according to an embodiment of this application;
FIG. 2 is a diagram of a sectional structure of a loudspeaker module according to an embodiment of this application;
FIG. 3 is a diagram of a sectional structure of a loudspeaker module according to an embodiment of this application;
FIG. 4 is a diagram of acoustic effects of a loudspeaker module according to an embodiment of this application;
FIG. 5 is a diagram of a mounting structure of a loudspeaker module according to an embodiment of this application;
FIG. 6 is a diagram of a mounting structure of a loudspeaker module according to an embodiment of this application;
FIG. 7 is a diagram of comparison between acceleration levels at a mounting position of a loudspeaker module according to an embodiment of this application;
FIG. 8 is a diagram of comparison between acceleration levels at a mounting position of a loudspeaker module according to an embodiment of this application;
FIG. 9 is a diagram of a mounting structure of a loudspeaker module according to an embodiment of this application;
FIG. 10 is an acoustic analogy equivalent circuit diagram of a loudspeaker module according to an embodiment of this application; and
FIG. 11 is a diagram of a sectional structure of another loudspeaker module according to an embodiment of this application.

### DESCRIPTION OF EMBODIMENTS

The following describes technical solutions of this application with reference to accompanying drawings.

Reference to "one embodiment", "some embodiments", or the like described in this specification means that one or more embodiments of this application include a particular feature, structure, or characteristic described in combination with the embodiment. Therefore, in this specification, statements, such as "in an embodiment", "in some embodiments", "in some other embodiments", and "in other embodiments", that appear at different places do not necessarily mean a same embodiment. Instead, the statements mean "one or more but not all of the embodiments", unless otherwise specifically emphasized.

In embodiments of this application, "first", "second", and the like are merely intended to indicate that a plurality of objects are different. For example, a first cavity and a second cavity are merely used to represent different cavities. The terms should impose no impact on the cavities and the quantities thereof. "First", "second", and the like described above should not impose any limitation on embodiments of this application.

Terms "include", "contain", "have", and variants of the terms all mean "include but are not limited to", unless otherwise specifically emphasized.

In embodiments of this application, unless otherwise specified, a quantity of nouns indicates "a singular noun or a plural noun", namely, "one or more". "At least one" means one or more, "a plurality of" means two or more, and "more" in "one or more types" means two or more similar types.

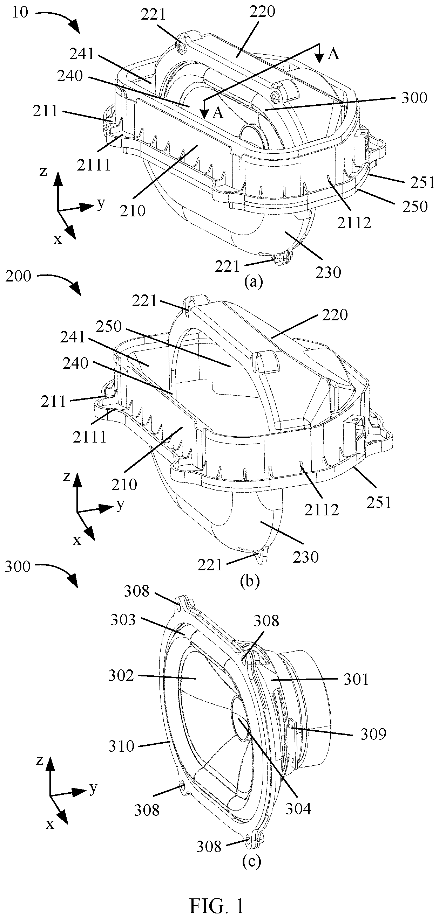

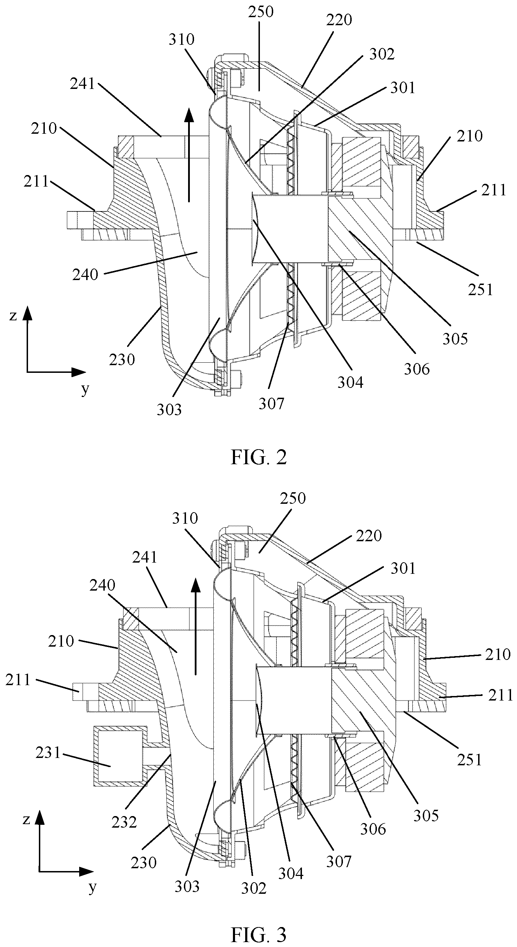

FIG. 1 and FIG. 2 are diagrams of structures of a loudspeaker module according to embodiments of this application. FIG. 1 is a diagram of a three-dimensional structure of the loudspeaker module according to an embodiment of this application. (a) in FIG. 1 is a diagram of an overall structure of the loudspeaker module, (b) in FIG. 1 is a diagram of a structure of a frame body, and (c) in FIG. 1 is a diagram of a structure of a loudspeaker unit. FIG. 2 is a diagram of a sectional structure of the structure shown in FIG. 1 along an A-A section.

Refer to the structures shown in FIG. 1 and FIG. 2. A loudspeaker module 10 may include a loudspeaker unit 300 and a frame body 200, and the loudspeaker unit 300 may be disposed in the frame body 200.

The entire loudspeaker unit 300 may be approximately of a tapered structure, and the loudspeaker unit 300 may include structural components such as a basket 301, a magnetic circuit system 305, a voice coil 306, a diaphragm 302, a damper 307, a surround 303, and a dust cap 304. The basket 301 is a main support structure of the loudspeaker unit 300. The components such as the magnetic circuit system 305, the voice coil 306, the diaphragm 302, the damper 307, the surround 303, and the dust cap 304 may be disposed in the basket 301, and the basket 301 may be approximately of a tapered structure. Usually, a material of the basket 301 may have features such as light weight, difficult deformation, and good heat dissipation. For example, the material may be a metal material.

The magnetic circuit system 305 may include a magnet, a soft magnetic material washer, and a yoke. The voice coil 306, the diaphragm 302, and the damper 307 are main components of the vibration system. The voice coil 306 may be formed by winding a conducting wire on a pipe material and placed in a magnetic clearance of the magnetic circuit system 305. The diaphragm 302 may be disposed around an inner circumference of the loudspeaker unit 300. In other words, the diaphragm 302 may be disposed around an inner circumference of the basket 301. In addition, one end of the diaphragm 302 may be connected to the voice coil 306, and the other end may be connected to the surround 303. For example, the diaphragm 302 may be a tapered diaphragm. An end with a smaller radial size of the tapered diaphragm 302 may be connected to the voice coil 306, and an end with a larger size of the tapered diaphragm 302 may be connected to the surround 303. The diaphragm 302 may alternatively be of a planar structure, an arc-shaped structure, or the like, and a material of the diaphragm 302 may be a fiber, rubber, an elastomer, metal, or the like. When the loudspeaker unit 300 is powered on, the magnetic circuit system 305 generates a magnetic field, exerts an action force on the voice coil 306, and drives the voice coil 306 to vibrate. The voice coil 306 vibrates to drive the diaphragm 302 to vibrate, and the diaphragm 302 vibrates to drive air to vibrate. In this way, sound is generated. The dust cap 304 may cap an end that is of the voice coil 306 and that is away from the magnetic circuit system 305, to prevent dust for the voice coil 306, so as to prevent noise during vibration of the voice coil 306.

The damper 307 may be disposed between the voice coil 306 and the paper basin. The damper 307 may be configured to ensure that the voice coil 306 moves in the magnetic clearance in an axial direction of the loudspeaker unit 300 instead of a transverse direction. The axial direction of the loudspeaker unit 300 is a direction of a y axis shown in the figure. The axial direction of the loudspeaker unit 300 may also be referred to as a normal direction of the diaphragm 302. The damper 307 may be made of a material like a cotton fabric or a fiber material. The surround 303 may be of a ring-shaped structure. The surround 303 may be disposed, in a circumferential direction, at an end a larger radial size of the loudspeaker unit 300, and the surround 303 may be connected to the other end of the diaphragm 302. The surround 303 may also be configured to ensure that the diaphragm 302 moves in the axial direction of the loudspeaker instead of the transverse direction. The surround 303 may be made of a material like plastic, natural rubber, or paper, and is bonded to the diaphragm 302 through hot pressing. The damper 307 and the surround 303 work together to ensure that the diaphragm 302 and the voice coil 306 move in the axial direction within a specific range.

The loudspeaker unit 300 may be disposed in the frame body 200, and the loudspeaker unit 300 may include a first mounting surface 310. The first mounting surface 310 may be disposed at the end with the larger radial size of the loudspeaker unit 300, and the first mounting surface 310 may be of a planar structure. In other words, the first mounting surface 310 may be parallel to an xz plane shown in the figure. Because the diaphragm 302 is disposed around the inside of the loudspeaker unit 300, the first mounting surface 310 may be located in a front part of the diaphragm 302, that is, in a positive direction of the y-axis. The first mounting surface 310 may be located at a position closer to an origin on the y-axis relative to the diaphragm 302. The first mounting surface 310 may be fastened to the frame body 200, for example, fastened to the frame body 200 in a manner of screwing, bonding, or the like. For example, the first mounting surface 310 of the loudspeaker unit 300 may include one or more through holes 308, for example, four through holes 308 shown in the figure. A position of the frame body 200 corresponding to the through hole 308 may include one or more through holes 221, so that screws can sequentially pass through the through holes 308 and the through holes 221, to fasten the frame body 200 to the loudspeaker unit 300. Through holes may also be disposed in a middle part and a tail part of the loudspeaker unit 300. For example, a through hole 309 may be disposed in the middle part of the loudspeaker unit 300. Correspondingly, a through hole (not shown in the figure) may also be disposed in a corresponding position of the frame body 200, so that connection between the loudspeaker unit 300 and the frame body 200 is stable.

The frame body 200 may include a side wall 210, a top wall 220, and a bottom wall 230. The side wall 210 may be in a ring shape, and is disposed around an outer circumference of the loudspeaker unit 300. In addition, a part of the side wall 210 may be located on a front side of the loudspeaker unit 300, and a part of the side wall 210 may be located on a rear side of the loudspeaker unit 300.

An outer circumference of the frame body 200 may include a second mounting surface 211, and the second mounting surface 211 may be configured to fasten the loudspeaker module 10 to a preset mounting position. The second mounting surface 211 may be disposed on an outer circumference of the side wall 210 of the frame body 200. A main plane of the second mounting surface 211 may be perpendicular to a main plane of the side wall 210. The main plane of the second mounting surface 211 is a surface that has a larger area and that is of the second mounting surface. The main plane of the second mounting surface 211 of the loudspeaker module 10 shown in FIG. 1 and FIG. 2 may be an xy plane shown in the figures. When the loudspeaker module 10 is fastened to the preset mounting position, the second mounting surface 211 may be parallel to a fastening position, so that the connection between the second mounting surface 211 and the preset mounting position is stable. The second mounting surface 211 may include mounting holes 2111. There may be at least three mounting holes 2111, and the mounting holes 2111 may be evenly distributed on the second mounting surface 211. The mounting holes 2111 may run through the second mounting surface 211 in a direction perpendicular to the main plane of the second mounting surface 211, so that the second mounting surface 211 can be fastened to the preset mounting position of the loudspeaker module 10 in a screwing manner. The preset mounting position of the loudspeaker module 10 may be an infinite baffle in a vehicle cabin, for example, may be a position like inner sheet metal of a vehicle door, a trim panel, a floor, or a ceiling.

It should be noted that, in embodiments of this application, two mechanical parts being parallel to each other may mean that the two mechanical parts are approximately parallel rather than absolutely parallel. A person skilled in the art may understand that due to an error caused by production, a specific tilt angle is allowed for the two parallel mechanical parts. For example, when an included angle between the two mechanical parts is less than or equal to 10°, it may be considered that the two mechanical parts are parallel. Similarly, the two perpendicular mechanical parts may be approximately perpendicular to each other.

The bottom wall 230 may extend from a position of the first mounting surface 310 of the loudspeaker unit 300 to a front part of the loudspeaker unit, that is, extend from the first mounting surface 310 of the loudspeaker unit 300 to a negative direction of the y axis, and is fastened to the side wall 210. The bottom wall 230 may be fastened to an inner circumference of the side wall 210, or may be fastened to a bottom end of the side wall 210.

A shape of the bottom wall 230 may be a wedge shape, a square shape, an arc shape, a plane shape, an irregular shape, or the like. This is not limited in this application.

The frame body 200 and a side that is of the diaphragm 302 of the loudspeaker unit 300 and that is close to the first mounting surface 310 may form a first cavity 240. The first cavity 240 is a space formed by the bottom wall 230, the side wall 210, and the side that is of the diaphragm 302 and that is close to the first mounting surface 310. The first cavity 240 may also be referred to as a front cavity of the loudspeaker module 10, and the side that is of the diaphragm 302 and that is close to the first mounting surface 310 of the loudspeaker unit 300 may also be referred to as the front part of the diaphragm 302 of the loudspeaker unit 300.

A side that is of the frame body 200 and that is close to the first mounting surface 310 of the loudspeaker unit 300 may include an open surface 241, or a part that is of the frame body 200 and that is located in the front part of the loudspeaker unit 300 may include an open surface. The open surface 241 may also be referred to as a first open surface or a sound outlet of the loudspeaker module. The open surface may mean that the side that is of the frame body 200 and that is close to the first mounting surface 310 of the loudspeaker unit 300 is not completely closed, so that sound generated by the loudspeaker unit 300 can be transmitted to the outside of the frame body 200 through the first open surface 241. For example, for the loudspeaker module shown in the figure, there is a specific gap between the front part of the loudspeaker unit 300 and the side wall 210, and the top wall 220 is not connected to the side wall 210, so that the first open surface 241 is formed at an upper end of the side wall 210. When a plane on which the upper end of the side wall 210 is located is parallel to the main plane of the second mounting surface 211, the first open surface 241 may also be parallel to the main plane of the second mounting surface 211. The first open surface is formed on the frame body 200, and therefore, the first cavity 240 is an open cavity. Then, a sound wave generated by vibration of the diaphragm 302 of the loudspeaker unit 300 may be radiated outward through the first open surface 241.

A volume of the first cavity 240 may be greater than or equal to 0.1 liters (L). For example, the volume of the first cavity 240 may be 0.1 L, 0.15 L, 0.2 L, 0.25 L, 0.3 L, 0.35 L, 0.4 L, or the like.

The volume of the first cavity 240 may be set, so that a ratio of an acoustic cut-off frequency of the loudspeaker module 10 to a resonance frequency of the loudspeaker module 10 is greater than or equal to 4. For example, the acoustic cut-off frequency of the loudspeaker module 10 may be 4 times, 4.5 times, 5.5 times, or the like the resonance frequency of the loudspeaker module 10, so that an operation band of the loudspeaker module is wide. This ensures acoustic performance of the loudspeaker module 10. The acoustic cut-off frequency may refer to a specific frequency at which signals start to not pass through a system.

Before the acoustic cut-off frequency, a structure of the first cavity 240 does not affect output of a sound wave. When an operation frequency of the loudspeaker module 10 is greater than the cut-off frequency, electro-acoustic conversion efficiency of the loudspeaker module 10 gradually decreases. Therefore, based on a structural design of the first cavity 240, for example, setting a large volume of the first cavity 240, the acoustic cut-off frequency of the loudspeaker module 10 can be higher than an upper limit of the operation frequency, so that the loudspeaker module has a wide operation band, and high electro-acoustic conversion efficiency is ensured. In this way, acoustic performance of the loudspeaker module 10 is ensured.

The top wall 220 may be disposed above the second mounting surface 211, and at least a part of the top wall 220 may be fastened to the side wall 210. "Above the second mounting surface 211" may mean that the top wall 220 is above the second mounting surface 211 in a z-axis direction shown in the figure. The top wall 220 may extend backwards from the position of the first mounting surface 310 of the loudspeaker unit 300 to the tail part of the loudspeaker unit 300, and is connected to the side wall 210 located at the tail part of the loudspeaker unit 300. A part that is of the top wall 220 and that is connected to the side wall 210 may be connected to the inner circumference of the side wall 210, or may be connected to the top of the side wall 210. When the entire loudspeaker unit 300 is approximately of a tapered structure, the tail part of the loudspeaker unit 300 is an end of the loudspeaker unit 300 with a smaller radial size. Alternatively, the top wall 220 may continue extending forward from the first mounting surface 310, that is, continue extending in the negative direction of the y-axis shown in FIG. 1, provided that it is ensured that the top wall 220 is not completely connected to the side wall 210 located at the front end of the first mounting surface 310, and the first open surface 241 is formed.

Some through holes 221 in the foregoing through holes 221 may be disposed on the top wall 220 and close to the first mounting surface 310, for example, may be disposed on left and right sides of the top wall 220, and are respectively fastened to two through holes 308 on an upper side of the first mounting surface 310, so that the frame body 200 can be fastened to the loudspeaker unit 300. A shape of a part that is of the top wall 220 and that is close to the first mounting surface 310 of the loudspeaker unit 300 may be the same as the shape of the first mounting surface 310, so that the top wall 220 may be attached to the outer circumference of the first mounting surface 310 to form a sealed surface. An appearance of the top wall 220 may be similar to an appearance of the loudspeaker unit 300, and a wedge surface is formed on the top, to reduce a volume of the loudspeaker module 10, so that when the loudspeaker module 10 is fastened to the preset mounting position, another component in a mounting scenario can be avoided. The top wall 330 may alternatively be in a square shape, an arc shape, a plane shape, an irregular shape, or the like. This is not limited in this application.

The frame body 200 and a side that is of the diaphragm 302 of the loudspeaker unit 300 and that faces away from the first mounting surface 310 may form a second cavity 250, namely, a space formed by the side wall 210, the top wall 220, and the side that is of the diaphragm 302 and that faces away from the first mounting surface 310. The second cavity 250 may also be referred to as a rear cavity of the loudspeaker module 10, and the side that is of the diaphragm 302 and that faces away from the first mounting surface 310 may also be referred to as a rear part of the diaphragm 302. Because the tail part of the loudspeaker unit 300 has a smaller radial size compared with that of a head part, there may be a specific gap between the tail part of the loudspeaker unit 300 and the side wall 210. In other words, a second open surface 251 may be formed between the tail part of the loudspeaker unit 300 and the side wall 210. The second open surface 251 may also be referred to as an opening part 251. Due to the opening part 251, the second cavity 250 may be an open cavity, and an opening direction of the opening part 251 may be perpendicular to the main plane of the second mounting surface 211. In this way, the loudspeaker module 10 may radiate a sound wave outwards in the opening direction, that is, may propagate sound wave energy outwards in a negative direction of the z-axis shown in the figure.

The bottom wall 230 of the loudspeaker module 10 may alternatively continue extending from a position connected to the first mounting surface 310 of the loudspeaker unit 300 to the rear part of the loudspeaker unit 300, that is, extend in the positive direction of the y-axis shown in the figure, provided that it is ensured that at least a part of the bottom wall 230 is not connected to the side wall 210 located at the rear part of the loudspeaker unit 300, and the opening part 251 is formed at the rear part of the loudspeaker unit 300.

The bottom wall 230 of the frame body 200 may be disposed below the second mounting surface 211. "Below the second mounting surface 211" means that the bottom wall 230 is below the second mounting surface 211 in the z-axis direction shown in the figure. Some through holes 221 in the foregoing through holes 221 may alternatively be disposed on the bottom wall 230 and close to the first mounting surface 310 of the loudspeaker unit 300. For example, some through holes 221 may be disposed on left and right sides of the bottom wall 230, and are respectively fastened to two through holes 308 on a lower side of the first mounting surface 310, so that the frame body 200 can be fastened to the loudspeaker unit 300. A sealed surface may be formed at a position at which the bottom wall 230 is connected to the first mounting surface 310. For example, a shape of a part that is of the bottom wall 230 and that is close to the first mounting surface 310 of the loudspeaker unit 300 may be the same as the shape of the first mounting surface 310, so that the outer circumference of the first mounting surface 310 of the loudspeaker unit 300 may be separately attached to the top wall 220 and the side wall 210 of the frame body 200. In this way, a connection surface between the loudspeaker unit 300 and the frame body 200 is a sealed surface. Further, an inner diameter of the side wall 210 may also be the same as a radial size of the loudspeaker unit 300, so that a sealed surface is formed at the position at which the entire frame body 200 is connected to the first mounting surface 310. The sealed surface is formed at the position at which the frame body 200 is connected to the loudspeaker unit 300, so that a front cavity and a rear cavity of the loudspeaker unit 300 can be isolated, to avoid mutual cancellation between front and rear sound waves. This improves efficiency of sound wave radiation in a direction of the first cavity 240.

The top wall 220, the side wall 210, and the bottom wall 230 may form an integral structure, or may be a plurality of parts that are fastened through welding or the like.

It should be noted that "same" in terms of size in embodiments of this application does not mean absolutely same. A person skilled in the art may understand that, because a person skilled in the art may properly adjust a size of a mechanical part based on a design requirement, a deviation within a specific range is allowed for "same" sizes of two mechanical parts. For example, the difference ranges from 0.1 mm to 0.5 mm.

In some embodiments, the loudspeaker module 10 may further include a first sub-cavity 231. The first sub-cavity 231 may be disposed on the outer circumference of the frame body 200, and the first sub-cavity 231 may communicate with the first cavity 240. The first sub-cavity 231 may also be referred to as a branch cavity. Refer to the structure shown in FIG. 3. For example, the structure shown in FIG. 3 may be the sectional structure of the loudspeaker module 10 along a yz plane. The branch cavity 231 may be disposed on the outer circumference of the bottom wall 230. In addition, the bottom wall 230 may be provided with a through hole 232, so that the branch cavity 231 communicates with the first cavity 240. There may be a plurality of branch cavities 231. The plurality of branch cavities 231 may be disposed at different positions of the bottom wall 230, and the plurality of branch cavities 231 may communicate with the first cavity 240. Resonance frequencies of the plurality of branch cavities 231 may be different.

The first sub-cavity 231 may alternatively be disposed inside the frame body 200 (not shown in the figure). For example, the first sub-cavity 231 may be disposed on the loudspeaker unit 300 and away from the first mounting surface 310, and located below the top wall 220. The position at which the frame body 200 is connected to the first mounting surface 310 of the loudspeaker unit 300 may include a hole, so that the first sub-cavity 231 communicates with the first cavity 240.

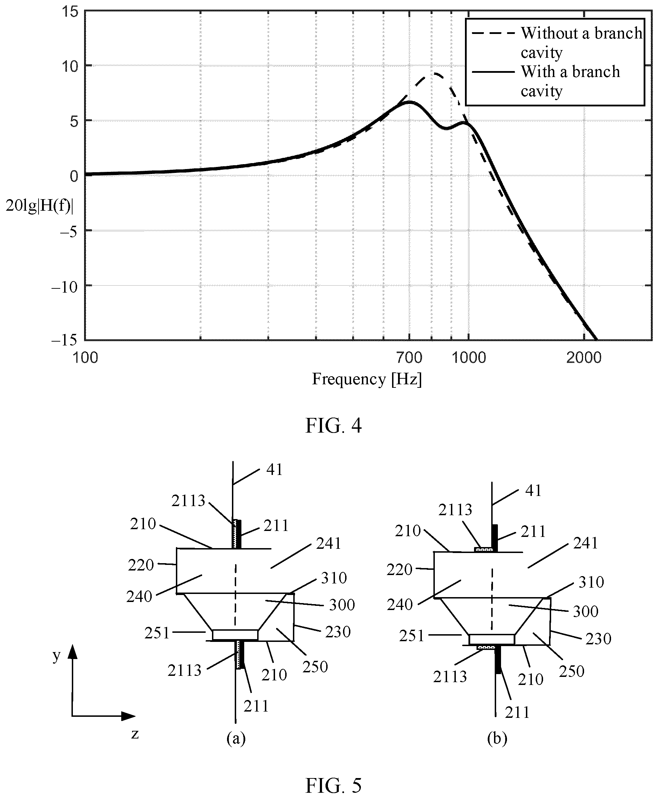

FIG. 4 is a diagram of an acoustic effect in a case where a branch cavity 231 is disposed and an acoustic effect in a case where no branch cavity 231 is disposed according to an embodiment of this application. A horizontal coordinate is a sound wave frequency (unit: Hz), and a vertical coordinate is an acoustic transfer function amplitude value (unit: dB). Disposing the branch cavity can suppress a resonance peak of the first cavity 240 of the loudspeaker module 10 and expand a bandwidth. This ensures acoustic performance of the loudspeaker module 10.

In some embodiments, the side that is of the second mounting surface 211 and that is close to the preset mounting position may further include a shock absorption pad 2113, and a material of the shock absorption pad 2113 may be, for example, rubber, plastic, or a composite material. For a position of the shock absorption pad 2113, refer to a structure shown in FIG. 5. In FIG. 5, an example in which inner sheet metal 41 of a vehicle door is used as the preset mounting position is used for description.

In an example, as shown in (a) in FIG. 5, the shock absorption pad 2113 may be disposed between the second mounting surface 211 and the preset mounting position, for example, disposed between the second mounting surface 211 and the inner sheet metal of the vehicle door, and is configured to reduce transfer of sound wave energy generated by the loudspeaker module 10 in a normal direction of the preset mounting position, reduce vibration of the preset mounting position in the normal direction, and further reduce noise. The shock absorption pad 2113 may be ring-shaped. The ring-shaped shock absorption pad 2113 may be in a shape the same as a shape of the second mounting surface 211, and is disposed on a lower side of the entire second mounting surface 211. In addition, the shock absorption pad 2113 may be parallel to the main plane of the second mounting surface 211. There is a corresponding hole (not shown in the figure) at a position that is on the shock absorption pad 2113 and that corresponds to the mounting hole 2111, so that a screw can pass through the mounting hole 2111 and the hole to connect the preset mounting position through screwing.

In another example, as shown in (b) in FIG. 5, the main plane of the shock absorption pad 2113 may be perpendicular to the main plane of the second mounting surface 211, that is, may be perpendicular to the inner sheet metal 41 of the vehicle door. The shock absorption pad 2113 may also be of a ring-shaped structure, and the main plane of the shock absorption pad 2113 may be attached to the side wall 210 of the loudspeaker module 10. When the loudspeaker module 10 is fastened to the inner sheet metal 41 of the vehicle door, the shock absorption pad 2113 may be located between the inner sheet metal 41 of the vehicle door and the side wall 210 of the loudspeaker module 10.

The loudspeaker module 10 may include one shock absorption pad 2113, or may include a plurality of shock absorption pads 2113. For example, the shock absorption pad 2113 may be disposed at the position shown in (a) in FIG. 5, or the shock absorption pad 2113 may be disposed at the position shown in (b) in FIG. 5.

The second mounting surface 211 may further include a support component 2112, and the support component 2112 may be disposed on a side that is of the second mounting surface 211 and that faces away from the preset mounting position, for example, disposed on an upper side that is of the second mounting surface 211 in the z-axis direction shown in the figure. The support component 2112 may be perpendicular to the main plane of the second mounting surface 211, and is fastened to the side wall. Support components 2112 may be disposed on the entire second mounting surface 211. The support component 2112 can stabilize connection between the second mounting surface 211 and the side wall, to stabilize connection between the loudspeaker module 10 and the preset mounting position.

In some embodiments, an included angle between the axial direction of the loudspeaker unit 300 and the main plane of the second mounting surface 211 may range from -30° to 30°, and an included angle between a sound output direction of the first cavity 240 and a plane on which the first mounting surface 310 is located may range from -30° to 30°.

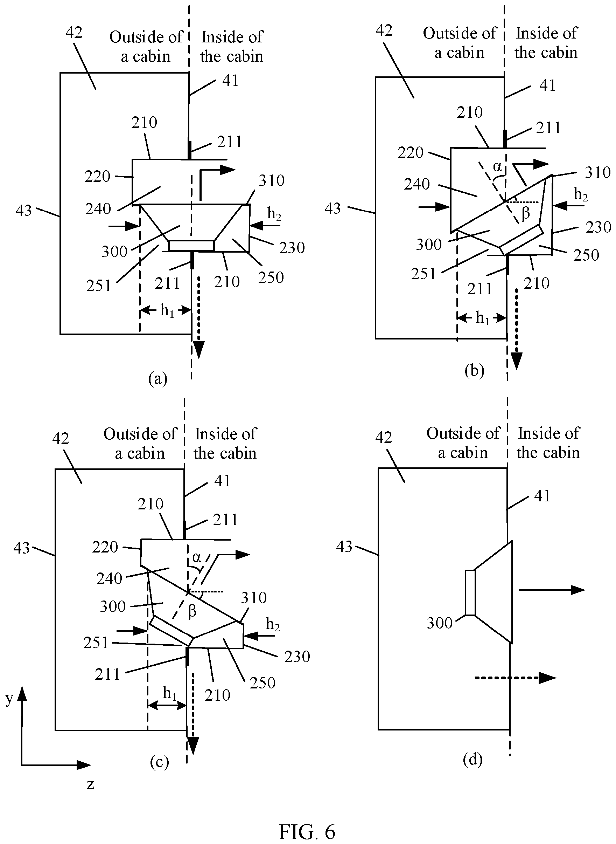

Refer to a diagram of mounting the loudspeaker module at the preset mounting position shown in FIG. 6. For example, the loudspeaker unit 300 may be mounted at a position close to the inside of the cabin of the vehicle, for example, may be mounted on a door of the vehicle, that is, the preset mounting position may be located on the door of the vehicle. In addition, the preset mounting position may be located on the inner sheet metal 41 of the vehicle door, and the preset mounting position may be a part of the inner sheet metal 41 of the vehicle door, for example, may be a part that is in direct contact with the second mounting surface 211 of the loudspeaker module. The inner sheet metal 41 of the vehicle door may include a mounting hole, and the loudspeaker module 10 may be embedded into the mounting hole and mounted at the inner sheet metal 41 of the vehicle door via the mounting hole. When the loudspeaker module is fastened to the preset mounting position, the main plane of the second mounting surface 211 of the loudspeaker module may be parallel to the main plane of the preset mounting position, and the main plane of the preset mounting position may be parallel to a plane of the vehicle door. The plane of the vehicle door may be a plane on which the inner sheet metal 41 of the vehicle door is located. In an actual product, the inner sheet metal 41 of the vehicle door may be in an irregular shape, for example, may include a protruding part and a depression part. The plane on which the inner sheet metal 41 of the vehicle door is located may be a plane that has a larger plane area on the inner sheet metal 41 of the vehicle door, and the loudspeaker module may be mounted on the plane part of the inner sheet metal 41 of the vehicle door, so that connection between the loudspeaker module and the inner sheet metal of the vehicle door is stable.

The vehicle door may further include an outer wall. The outer wall may be outer sheet metal 43 of the vehicle door. An inner sheet-metal space 42 may be formed between the inner sheet metal 41 of the vehicle door and the outer sheet metal 43 of the vehicle door. The inner sheet-metal space 42 may be of a hollow structure, and has a specific volume. At least a part of the loudspeaker module 10 may be accommodated in the accommodation space. The opening part 251 of the loudspeaker module 10 may face towards the inner sheet-metal space 42. When the loudspeaker module 10 is fastened to the preset mounting position, the loudspeaker module 10 and an accommodation space of the preset mounting position may form a closed space. The loudspeaker module 10 may radiate a sound wave to the inner sheet-metal space 42, to lose a sound wave propagated by the loudspeaker module 10 in a direction of the second cavity 250, to ensure that the sound wave is propagated in the direction of the first cavity 240.

An included angle between the axial direction of the loudspeaker unit 300 and the main plane of the second mounting surface 211 may be α. In the diagram of the mounting structure shown in (a) in FIG. 6, the included angle α between the axial direction of the loudspeaker unit 300 and the second mounting surface 211 is 0°, and the axial direction of the loudspeaker unit 300 is parallel to the main plane of the second mounting surface 211. The loudspeaker module 10 in the diagram of the mounting structure may be the loudspeaker module 10 shown in FIG. 1 and FIG. 2. Alternatively, the loudspeaker unit 300 may be tilted in the frame body 200, that is, α may not be 0°. When α is a negative value, an opening direction of the loudspeaker unit 300 may face towards an inner side of a space enclosed by the frame body 200, that is, a direction of an accommodation space outside the cabin as shown in (b) in FIG. 6. When α is a positive value, the opening direction of the loudspeaker unit 300 may face towards an outer side of the space enclosed by the frame body 200, that is, may face away from the direction of the accommodation space outside the cabin as shown in (c) in FIG. 6. The loudspeaker unit 300 may be fastened to the frame body 200 in a structural relationship in which the included angle between the axial direction and the second mounting surface 211 ranges from -30° to 30°. Alternatively, the loudspeaker unit 300 may be rotatably connected to the frame body 200, so that the included angle between the axial direction of the loudspeaker unit 300 and the second mounting surface 211 may be adjusted within a range of -30° to 30°. For example, the tail part of the loudspeaker unit 300 may be rotatably connected to the frame body 200.

An included angle range β between a sound output direction of the loudspeaker module 10 or the sound output direction of the first cavity 240 and the plane on which the first mounting surface 310 of the loudspeaker unit 300 is located may range from -30° to 30°. The first mounting surface 310 of the loudspeaker unit 300 may be of a ring-shaped structure. The plane on which the first mounting surface 310 is located is a plane on which the ring-shaped structure is located. For the loudspeaker module 10 shown in FIG. 1 to FIG. 3, the plane on which the first mounting surface 310 is located may be parallel to the xz plane. The sound output direction of the loudspeaker module 10 may be a main sound output direction of the loudspeaker module, or may be a direction of the largest sound wave energy radiated by the loudspeaker unit 300. For the structures shown in FIG. 1 to FIG. 3, the sound output direction of the loudspeaker module 10 may be perpendicular to the main plane of the second mounting surface 211. In other words, the sound output direction of the loudspeaker module 10 may be perpendicular to a direction of a plane enclosed by an upper end of the side wall 210, that is, perpendicular to a plane on which the open surface 241 is located. Refer to an arrow direction shown in FIG. 2 or FIG. 3. Specifically, when the loudspeaker module 10 is mounted according to the structure shown in (a) in FIG. 6, a sound wave generated by the loudspeaker unit 300 may first propagate in the axial direction of the loudspeaker unit 300. After arriving at the frame body 200, for example, after arriving at the bottom wall 220, a sound output direction changes and propagation is towards the outside of the frame body 200. The sound output direction of the loudspeaker module 10 or the sound output direction of the first cavity 240 may be a final sound output direction that changes after the sound wave arrives at the frame body 200. In the structure shown in (a) in FIG. 6, an included angle between the sound output direction of the loudspeaker module 10 and the plane on which the first mounting surface 310 is located may be 0°. Similarly, when the loudspeaker module 10 is mounted according to the structure shown in (b) in FIG. 6, the included angle between the sound output direction of the loudspeaker module 10 and the plane on which the first mounting surface 310 is located may be a negative value, for example, -30°. When the loudspeaker module 10 is mounted according to the structure shown in (c) in FIG. 6, the included angle between the sound output direction of the loudspeaker module 10 and the plane on which the first mounting surface 310 is located may be a positive value, for example, may be 30°.

When the opening direction of the loudspeaker unit 300 directly faces towards the inside of the cockpit, that is, the axial direction of the loudspeaker unit 300 is perpendicular to the second mounting surface 211, and the sound output direction is perpendicular to the plane on which the first mounting surface 310 is located, as shown in (d) in FIG. 6, sound wave energy generated by the loudspeaker unit 300 may be directly propagated to the inside of the cabin in the z-axis direction shown in FIG. 6, for example, a direction shown by a solid arrow in (d) in FIG. 6. Tangential stiffness of the second mounting surface 211 is far greater than normal stiffness. In other words, stiffness of the inner sheet metal 41 of the vehicle door in the y-axis direction shown in the figure is far greater than stiffness in the z-axis direction. Smaller stiffness indicates a higher probability of vibration caused by force. When the sound wave energy is propagated in the z-axis direction, a force direction of the inner sheet metal of the vehicle door is also the z-axis direction, that is, a direction shown by a dashed arrow in the figure. As a result, the inner sheet metal 41 of the vehicle door easily vibrates in the z-axis direction, and further generates abnormal sound, affecting sound quality of the loudspeaker module 10.

In the loudspeaker module 10 provided in embodiments of this application, the included angle between the axial direction of the loudspeaker unit 300 and the main plane of the second mounting surface 211 ranges from -30° to 30°. In addition, an included angle between the sound output direction of the first cavity 240 and the plane on which the first mounting surface 310 of the loudspeaker unit 300 is located may range from -30° to 30°. In this way, sound wave energy transferred in a normal direction of the second mounting surface 211 can be effectively reduced. Therefore, vibration of the inner sheet metal 41 of the vehicle door and a position for connection of the inner sheet metal 41 of the vehicle door in the normal direction of the second mounting surface 211 can be effectively reduced, noise generated by operation of the loudspeaker module 10 can be reduced, and sound quality of the loudspeaker module 10 can be improved.

For example, the included angle between the axial direction of the loudspeaker unit 300 and the main plane of the second mounting surface 211 may range between ±30°, 25°, ±20°, ±15°, ±10°, ±5°, or the like, and the included angle between the sound output direction of the first cavity 240 and the plane on which the first mounting surface 310 of the loudspeaker unit 300 is located may range between ±30°, ±25°, ±20°, ±15°, ±10°, ±5°, or the like.

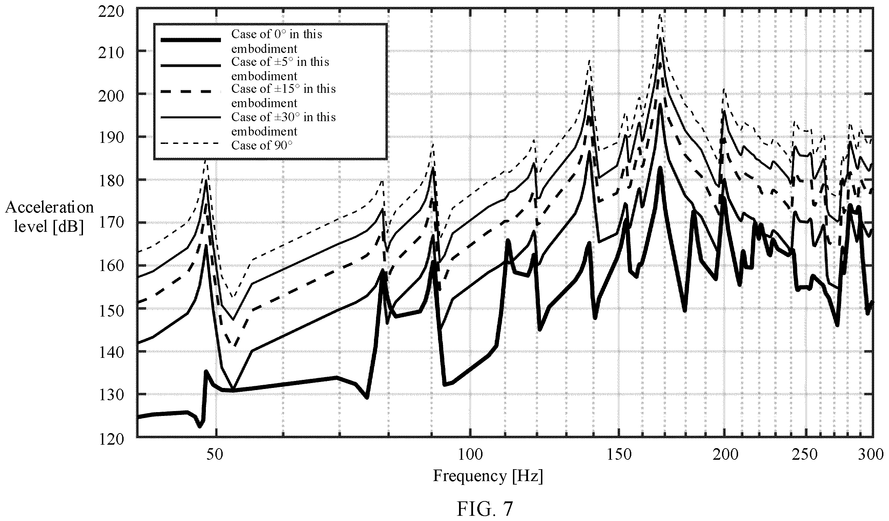

FIG. 7 is a diagram of comparison between acceleration effects at different mounting angles according to an embodiment of this application. When an acceleration level is higher, vibration at a mounting position is more intense. As shown in FIG. 7, when the mounting is forward-facing mounting, that is, when the included angle between the axial direction of the loudspeaker unit 300 and the second mounting surface 211 is 90°, an average acceleration level of the mounting position is 188 dB. When the included angle between the axial direction of the loudspeaker unit 300 and the second mounting surface is 0°, the average acceleration level at the mounting position is 155 dB. When the included angle between the axial direction of the loudspeaker unit 300 and the second mounting surface 211 is ±5°, the average acceleration level at the mounting position is 167 dB. When the included angle between the axial direction of the loudspeaker unit 300 and the second mounting surface 211 is ±15°, the average acceleration level at the mounting position is 176 dB. When the included angle between the axial direction of the loudspeaker unit 300 and the second mounting surface 211 is ±30°, the average acceleration level at the mounting position is 182 dB. When the included angle between the axial direction of the loudspeaker unit 300 and the second mounting surface 211 decreases from 90° to 30°, the acceleration level of the second mounting surface 211 has obvious gains, and as the included angle between the axial direction of the loudspeaker unit 300 and the second mounting surface 211 decreases, the acceleration level of the second mounting surface 211 continuously decreases, and vibration of the mounting position gradually slows down.

In some embodiments, a ratio of a maximum distance from a frame-body part corresponding to the first cavity 240 to the main plane of the second mounting surface 211 to a size of the loudspeaker module 10 in the direction perpendicular to the main plane of the second mounting surface 211 ranges from 1/4 to 3/4. When the loudspeaker module 10 is fastened to the preset mounting position, the frame-body part corresponding to the first cavity 240 may be accommodated in the accommodation space 42 formed at the preset mounting position. The maximum distance from the frame-body part corresponding to the first cavity 240 to the main plane of the second mounting surface 211 is an accommodation depth of the loudspeaker module 10 in the accommodation space at the preset mounting position, or is referred to as a mounting depth second mounting surface. As shown in (a) to (c) in FIG. 6, the preset mounting position may be the inner sheet metal 41 of the vehicle door, and a specific accommodation space may be formed between the inner sheet metal 41 of the vehicle door and the outer sheet metal 43 of the vehicle door, where the outer sheet metal 43 of the vehicle door is an outer wall of the vehicle. The maximum distance from the frame-body part corresponding to the first cavity 240 to the main plane of the second mounting surface is hi shown in the figure. The size of the loudspeaker module 10 in the direction perpendicular to the main plane of the second mounting surface 211 may be a sum of two distances. One is a distance from an end that is of a part of the loudspeaker module 10 in the accommodation space and that is farthest from the main plane of the second mounting surface 211 to the main plane of the second mounting surface 211. The other is a distance from an end of a part of the loudspeaker module 10 that is located outside the accommodation space and that is farthest from the main plane of the second mounting surface 211 to the main plane of the second mounting surface 211. That is, the sum is h₂ shown in the figure. The size of the loudspeaker module 10 in the direction perpendicular to the main plane of the second mounting surface 211 may also be referred to as a height of the loudspeaker module 10. A ratio of the mounting depth of the loudspeaker module 10 to the size of the loudspeaker module 10 in the direction perpendicular to the main plane of the second mounting surface 211 ranges from 1/4 to 3/4, so that torque between the loudspeaker module 10 and the mounting position can be reduced, and vibration at the mounting position of the loudspeaker module is reduced.

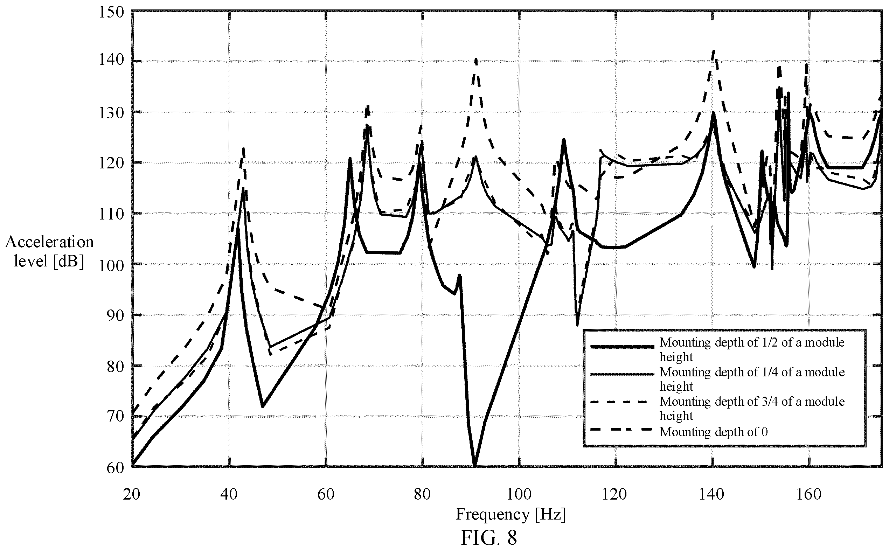

FIG. 8 is a diagram of comparison between acceleration effects corresponding to different mounting depths at the mounting position according to an embodiment of this application. As shown in FIG. 8, when a mounting depth of the loudspeaker module is 0, that is, when the loudspeaker module is mounted on a surface of the mounting position and is not in the accommodation space, an average acceleration level at the mounting position is 118.5 dB. When a ratio of the mounting depth to the height of the loudspeaker module is 1/4, the average acceleration level at the mounting position is 111.5 dB. When the ratio of the mounting depth to the height of the loudspeaker module is 3/4, the average acceleration level at the mounting position is 111.5 dB. When the mounting depth is 1/2, the average acceleration level at the mounting position is 105.7 dB. It can be seen that, when the ratio of the mounting depth to the height of the loudspeaker module increases from 0 to 1/4, the average acceleration level at the mounting position has obvious gains, and vibration at the mounting position is significantly reduced.

Still refer to the diagram of the mounting structures shown in FIG. 6. The inner sheet metal 41 of the vehicle door and the outer sheet metal 43 of the vehicle door may form the accommodation space 42. When the loudspeaker module 10 is fastened to the inner sheet metal 41 of the vehicle door, the frame-body part corresponding to the first cavity 240 may pass through the mounting hole on the inner sheet metal 41 of the vehicle door and be accommodated in the accommodation space. In addition, when the loudspeaker module is fastened to the inner sheet metal of the vehicle door, the opening part 251 of the loudspeaker module may communicate with the accommodation space 42. Further, a sealed surface may be formed at a position at which the second mounting surface 211 of the loudspeaker module 10 is connected to the inner sheet metal 41 of the vehicle door, and a sealed surface may be formed at a position at which the loudspeaker unit 300 is connected to the frame body 200. Due to the opening part 251, the second cavity 250 of the loudspeaker module 10 and the accommodation space 42 can together form a closed cavity. The closed cavity may be isolated from the first cavity 240, to lose a sound wave propagated by the loudspeaker module 10 to a side where the second cavity 250 is located, so as to improve an effect of sound output on the side of the first cavity 240.

A ratio of a volume of the second cavity 250 to a volume of the closed cavity may be less than or equal to 1/10. For example, the volume of the closed cavity may be 10 times, 15 times, 20 times, 25 times, or the like the volume of the second cavity 250, to further improve a bass effect of the first cavity 250.

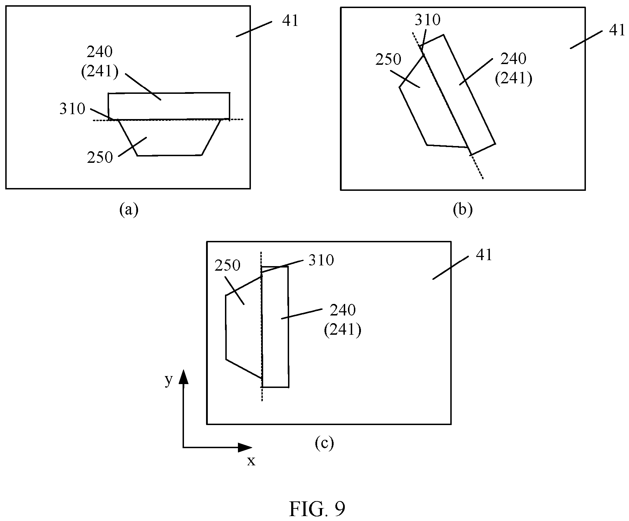

FIG. 9 is a diagram of another mounting structure according to an embodiment of this application. The diagram of the mounting structure may be a top view of the loudspeaker module 10, that is, a diagram of an overall structure corresponding to a case in which the loudspeaker module 10 is viewed in a direction perpendicular to the plane of the vehicle door. When the loudspeaker module 10 is mounted on the inner sheet metal 41 of the vehicle door, the plane on which the first mounting surface 310 of the loudspeaker unit 300 is located may be parallel to a lower contour of the inner sheet metal 41 of the vehicle door, in other words, parallel to the ground, that is, parallel to an x-axis direction shown in the figure. An angle relationship between a dashed line and the bottom of the inner sheet metal 41 of the vehicle door is shown in FIG. 9. In addition, the sound outlet of the loudspeaker module 10 is disposed in an upper half of the loudspeaker module 10, in other words, the first open surface 241 of the loudspeaker module 10 is located in the upper half of the loudspeaker module 10, that is, a part that is away from the ground and that is of the loudspeaker module 10, as shown in (a) in FIG. 9. Alternatively, the sound outlet of the loudspeaker module 10 may be located in a lower half of the loudspeaker module 10 (not shown in the figure). The plane on which the first mounting surface 310 of the loudspeaker unit 300 is located may alternatively be tilted, and then there is an included angle between the plane on which the first mounting surface 310 is located and the lower contour of the inner sheet metal 41 of the vehicle door. For example, the included angle may be 10°, 20°, 30°, 40°, 50°, 60°, 70°, or 80°, so that the sound outlet of the loudspeaker module 10 is located on a right side of the loudspeaker module, as shown in (b) in FIG. 9, or the sound outlet of the loudspeaker module 10 may be located on a left side of the loudspeaker module 10 (not shown in the figure). The plane on which the first mounting surface 310 of the loudspeaker unit 300 is located may alternatively be perpendicular to the lower contour of the inner sheet metal 41 of the vehicle door, so that the sound outlet of the loudspeaker module 10 is located on the right side of the loudspeaker module, as shown in (c) in FIG. 9, or the sound outlet of the loudspeaker module 10 may be located on the left side of the loudspeaker module 10 (not shown in the figure).

It should be noted that the mounting structure shown in FIG. 9 is merely used as an example of mounting the loudspeaker module 10 at the mounting position, and the mounting position of the loudspeaker module 10 should not be limited. The loudspeaker module 10 may be mounted at the mounting position at any angle, that is, there may be any included angle between the first mounting surface 310 and the bottom contour of the inner sheet metal 41 of the vehicle door, and the loudspeaker module 10 may be disposed at any position on the inner sheet metal 41 of the vehicle door, for example, may be disposed at a bottom, a top, a left side, or a right side of the inner sheet metal 41 of the vehicle door.

The structure shown in FIG. 9 may be a diagram of a mounting structure corresponding to a case in which the plane on which the first mounting surface 310 is located is perpendicular to the second mounting surface 211, in other words, a diagram of a mounting structure corresponding to a case in which the axial direction of the loudspeaker unit 300 is parallel to the main plane of the second mounting surface 211. When the axial direction of the loudspeaker unit 300 and the main plane of the second mounting surface 211 are in the foregoing included angle relationship, the first mounting surface 310 and the bottom contour of the inner sheet metal 41 of the vehicle door may also be in the foregoing included angle relationship, and the sound outlet of the loudspeaker module 10 may be located on the upper side, the lower side, the left side, the right side, or the like of the loudspeaker module 10.

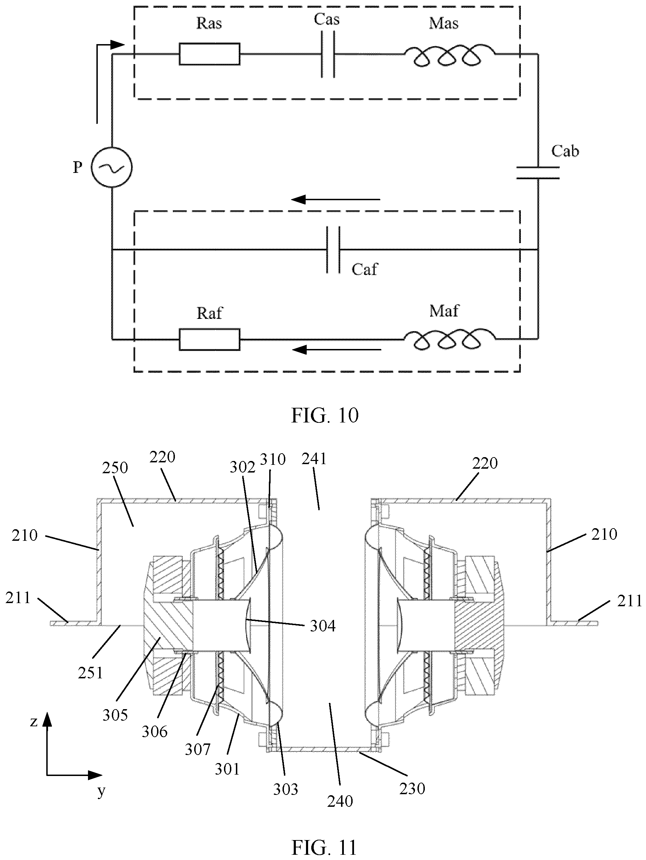

A circuit diagram shown in FIG. 10 is an acoustic analogy equivalent circuit diagram of the loudspeaker module 10 according to an embodiment of this application. A power supply P is equivalent to a magnetic circuit system 305 in the loudspeaker unit 300. A magnetic force generated when the magnetic circuit system 305 is powered on may drive a vibration system to vibrate. A resistor Ras may be equivalent to a direct current resistance of the voice coil 306 in the loudspeaker unit 300. A capacitor Cas and an inductor Mas may be equivalent to equivalent compliance and a quality of the vibration system of the loudspeaker unit 300. The power supply P, the resistor Ras, the capacitor Cas, and the inductor Mas may jointly form the loudspeaker unit 300. A capacitor Cab may be equivalent to the rear cavity of the loudspeaker module 10. The lower half of the acoustic analogy equivalent circuit diagram, including a capacitor Caf, a resistor Raf, and an inductor Maf, may be equivalent to the front cavity of the loudspeaker module 10. A current direction shown in the figure may be a flow of a sound volume velocity. There may be specific sound volume velocities in both the front cavity and the rear cavity of the loudspeaker module, and vibration velocities in the front cavity and the rear cavity may be the same.

In some embodiments, there may be a plurality of loudspeaker units 300, and the plurality of loudspeaker units 300 may form a symmetric structure. For example, FIG. 11 is a diagram of a cross-sectional structure of another loudspeaker module according to an embodiment of this application. As shown in FIG. 11, there may be two loudspeaker units 300, and the two loudspeaker units 300 may be disposed opposite to each other to form an axisymmetric structure. Correspondingly, there may also be a plurality of frame bodies 200, and a quantity of frame bodies 200 may be the same as a quantity of loudspeaker units 300. For example, when there are two loudspeaker units 300, there may also be two frame bodies 200. In this way, the plurality of loudspeaker units 300 can be respectively accommodated in corresponding frame bodies 200. The two loudspeaker units 300 and the corresponding frame bodies 200 may form independent loudspeaker modules, that is, two loudspeaker modules are formed. The two loudspeaker modules are disposed opposite to each other, and are separately fastened to a preset mounting position. The two loudspeaker units 300 and the corresponding frame bodies 200 may also form one loudspeaker module, that is, the two frame bodies 200 may be fastened, or may form an integrated structure. For example, the two frame bodies 200 may share a side wall to form one frame body 200. Disposing a plurality of loudspeaker units 300 that form a symmetric structure can further reduce vibration generated at a mounting position, increase sound pressure of the loudspeaker module, and improve sound production performance.

The loudspeaker module provided in embodiments of this application may be a bass loudspeaker module, and an operation frequency of the loudspeaker module may be less than 80 Hz.

An embodiment of this application further provides a vehicle. The vehicle may include any loudspeaker module 10 described in FIG. 1 to FIG. 9. The loudspeaker module 10 may be mounted on a vehicle door, for example, mounted on the inner sheet metal of the foregoing vehicle door. Alternatively, the loudspeaker module may be mounted at a position like a trim panel, a floor, or a ceiling inside the vehicle. As described above, the example in which the mounting position is the inner sheet metal of the vehicle door is used. The inner sheet metal of the vehicle door and the outer sheet metal of the vehicle door may form the accommodation space. When the loudspeaker module is fastened to the inner sheet metal of the vehicle door, the frame-body part corresponding to the first cavity may pass through the mounting hole and be accommodated in the accommodation space. In addition, when the loudspeaker module is fastened to the inner sheet metal of the vehicle door, the opening part 251 of the loudspeaker module may communicate with the accommodation space. In this case, due to the second open surface 251, the second cavity 250 and the accommodation space 42 can together form the closed cavity. The closed cavity may be isolated from the first cavity 240, to lose a sound wave propagated by the loudspeaker module to the side where the second cavity is located, so as to improve the effect of sound output on the side of the first cavity. The ratio of a volume of the second cavity 250 to a volume of the closed cavity may be less than or equal to 1/10, to further improve the bass effect of the first cavity 240.

It should be noted that the loudspeaker module may also be mounted at another preset mounting position inside the vehicle, provided that the preset mounting position and the loudspeaker module may form a sealed space. Similarly, the loudspeaker module may alternatively be disposed outside the vehicle, or disposed at another position that can form a sealed space with the loudspeaker module, for example, a wall or a sound box. An application scenario and a preset mounting position of the loudspeaker module are not limited in this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A loudspeaker module, comprising a loudspeaker unit and a frame body, wherein the loudspeaker unit is disposed in the frame body, the loudspeaker unit comprises a first mounting surface, the first mounting surface is located at an end with a larger radial size of the loudspeaker unit, and the loudspeaker unit is fastened to the frame body through the first mounting surface;
the loudspeaker unit further comprises a diaphragm, the diaphragm is disposed around the inside of the loudspeaker unit, the frame body and a side that is of the diaphragm and that is close to the first mounting surface form a first cavity, and an included angle between a sound output direction of the first cavity and a plane on which the first mounting surface is located ranges from -30° to 30°; and
an outer circumference of the frame body comprises a second mounting surface, the second mounting surface is configured to fasten the loudspeaker module to a preset mounting position, a main plane of the second mounting surface is parallel to a main plane of the preset mounting position, and an included angle between an axial direction of the loudspeaker unit and the main plane of the second mounting surface ranges from -30° to 30°.

2. The loudspeaker module according to claim 1, wherein the frame body and a side that is of the diaphragm and that faces away from the first mounting surface may form a second cavity; the second cavity and the first cavity are respectively disposed on two sides of the second mounting surface in a direction perpendicular to the main plane of the second mounting surface; the frame body comprises an opening part, so that the second cavity is an open cavity; and an opening direction of the opening part is perpendicular to the main plane of the second mounting surface.

3. The loudspeaker module according to claim 2, wherein a sealed surface is formed between the first mounting surface and the frame body, so that the first cavity is isolated from the second cavity.

4. The loudspeaker module according to any one of claims 1 to 3, wherein a ratio of a maximum distance from a frame-body part corresponding to the first cavity to the main plane of the second mounting surface to a size of the loudspeaker module in the direction perpendicular to the main plane of the second mounting surface ranges from 1/4 to 3/4.

5. The loudspeaker module according to any one of claims 1 to 4, wherein a volume of the first cavity is greater than or equal to 0.1 liters.

6. The loudspeaker module according to claim 5, wherein a ratio of an acoustic cut-off frequency of the loudspeaker module to a resonance frequency of the loudspeaker module is greater than or equal to 4.

7. The loudspeaker module according to any one of claims 1 to 6, wherein the loudspeaker module further comprises at least one first sub-cavity, and the at least one first sub-cavity communicates with the first cavity.

8. The loudspeaker module according to any one of claims 1 to 7, wherein a side that is of the second mounting surface and that is close to the preset mounting position comprises a shock absorption pad.

9. The loudspeaker module according to any one of claims 1 to 8, wherein the second mounting surface comprises mounting holes, there are at least three mounting holes, and the mounting holes penetrate the second mounting surface in the direction perpendicular to the second mounting surface.

10. The loudspeaker module according to any one of claims 1 to 9, wherein there are a plurality of loudspeaker units, the plurality of loudspeaker units form a symmetric structure, and first mounting surfaces of the plurality of loudspeaker units are close to each other.

11. The loudspeaker module according to claim 10, wherein there are a plurality of frame bodies, a quantity of frame bodies is the same as a quantity of loudspeaker units, and the plurality of loudspeaker units are respectively accommodated in the corresponding frame bodies.

12. A vehicle, comprising the loudspeaker module according to any one of claims 1 to 11, wherein the vehicle comprises a vehicle door, the preset mounting position is located on the vehicle door, and the main plane of the preset mounting position is parallel to a plane direction of the vehicle door.

13. The vehicle according to claim 12, wherein the vehicle further comprises an outer wall, and the outer wall and the preset mounting position form an accommodation space; and
when the loudspeaker module is fastened to the preset mounting position, the frame-body part corresponding to the first cavity is located in the accommodation space, the opening part communicates with the accommodation space, and the second cavity and the accommodation space form a closed cavity.

14. The vehicle according to claim 13, wherein a ratio of a volume of the second cavity to a volume of the closed cavity is less than or equal to 1/10.
